# EUROPÄISCHE PATENTSCHRIFT

(11) **EP 0 561 150 B1**
(45) Veröffentlichungstag und Bekanntmachung des Hinweises auf die Patenterteilung: **26.04.2000**
(21) Anmeldenummer: 93101962.4
(22) Anmeldetag: 08.02.1993
(51) Int. Cl.: H04M 3/42, H04M 3/50, H04M 11/00

(54) **Verfahren zum Implementieren von Programmen in einem mit einem Kommunikationssystem verbundenen Hostrechner**
Method for implementing programs in host connected to a communication system
Méthode pour réaliser des programmes dans un hôte connecté à un système de communication

(30) Priorität: 14.02.1992 DE 4204455
(43) Veröffentlichungstag der Anmeldung: 22.09.1993
(73) Patentinhaber: SIEMENS AKTIENGESELLSCHAFT, 80333 München (DE)
(72) Erfinder: Lybeer, Roger, B-09070 Destelbergen (BE); Muyssen, John, B-09050 Evergem (BE)

(56) Entgegenhaltungen:
- EP-A- 0 228 053
- EP-A- 0 264 006
- WO-A-85/02510
- DE-A- 2 758 722
- K. SATO ET AL: 'Hierarchical Network Data Management Architecture Applied to the Public Telephone Network' PROCEEDINGS INTERNATIONAL SWITCHING SYMPOSIUM, 15-20 MÄRZ 1987 Bd. 4, PHOENIX, US, Seiten 964 - 968
- E.J. PASTERNAK: 'Designing a System for Customer Control of Telecommunication Services' PROCEEDINGS OF THE SECOND INTERNATIONAL CONFERENCE ON COMPUTERSAND APPLICATIONS, 23-27 JUNI 1987 BEIJIN, CN, Seiten 130 - 136
- S. GILL: 'Building a User Friendly Service Creation Environment' PROCEEDINGS OF THE NATIONAL COMMUNICATIONS FORUM, 2-4 OKT. 1989 Nr. 1, OAK BROOK, ILLINOIS US, Seiten 345 - 350, XP000220388

## Beschreibung

Die Erfindung betrifft ein Verfahren gemäß Oberbegriff des Patentanspruchs 1.

Basis einer zeitgemäßen Bürokommunikation sind Kommunikationssysteme, die über Verbindungsleitungen miteinander verbunden sind. Die Vielfalt der von Kommunikationssystemen bereitgestellten Leistungsmerkmale hat in den letzten Jahren stetig zugenommen, insbesondere weil zum lange praktizierten Kommunikationsdienst 'Sprache' andere Formen der Kommunikation wie die Übertragung von Bildern, Daten oder Texten hinzugekommen sind. Im Zusammenhang damit hat die Vernetzung der einzelnen Kommunikationssysteme immer weiter zugenommen.

Weiterhin existieren neben diesen, der Übertragung beliebiger Daten dienenden Kommunikationsnetzen Sonderdatennetze zur Übertragung spezieller Daten. Dabei kann es sich beispielsweise um ein Netz handeln, über das Alarmdaten von Feuermeldern zu zentralen Stellen übertragen werden. Das Vorhandensein von 'allgemeinen' Kommunikationsnetzen macht diese Sonderdatennetze überall dort überflüssig, wo über jene Kommunikationsnetze kleinere Datenmengen ohne wesentliche Einschränkung der Verfügbarkeit der Kommunikationsdienste für übrige Dienste mitübertragen werden können.

Eine bekannte Anwendung dieser Mitbenutzung der Wege eines bereits bestehenden Kommunikationsnetzes erfolgt im sogenannten Teilnehmerdatendienst. Dabei werden kleinere Datenmengen von Fernsprech-Endgeräten zu einem an das Fernsprech-Kommunikationssystem angeschlossenen Hostrechner gesendet. Der Hostrechner, in üblicherweise Gebührendaten berechnet werden, kann - je nach Größe des Kommunikationssystems - eine größere Datenverarbeitungsanlage oder ein Personal Computer sein. Die vom Fernsprechendgerät ausgehenden Daten werden hier überprüft, verarbeitet und abgespeichert:
Dabei gibt ein Teilnehmer an seinem Fernsprech-Endgerät zunächst eine spezielle Codenummer ein. Dies kann beispielsweise durch Betätigen einer speziellen Taste am Endgerät erfolgen. Dadurch werden die bei dem anschließenden Betätigen der Tasten erzeugten Daten als Sonderdaten definiert. Daraufhin 'reicht' das Kommunikationssystem diese Daten durch ein Koppelfeld des Kommunikationssystems zum Hostrechner durch; dieser übernimmt die Sonderdaten und bindet sie in anwendungsorientierte Steuerprozeduren ein.

Beispiele für derartige Teilnehmerdatendienste sind die Gleitzeiterfassung oder Bestellvorgänge:
Im Falle der Gleitzeiterfassung gibt der Mitarbeiter beim Erreichen des Arbeitsplatzes über ein entsprechendes Pass-Wort einen Nummerncode in das Endgerät 'Telefon' ein; auch das Verlassen des Arbeitsplatzes wird dem Hostrechner durch Eingabe der hierzu erforderlichen Ziffernfolgen signalisiert. Somit kann der Hostrechner anhand der identifizierten Codenummer und einer im Hostrechner geführten Uhr definierte Zeitpunkte und damit die Arbeitszeit ermitteln und abspeichern.

In prinzipiell ähnlicher Weise können auch Bestellvorgänge über Fernsprech-Endgeräte abgewickelt werden. So kann beispielsweise der Mitarbeiter eines Betriebes über das Eingeben von Ziffernfolgen ein Menue in der Kantine bestellen; falls eine Bestellung nicht möglich ist, teilt dies der Hostrechner dem Mitarbeiter über entsprechende Quittungstöne mit.

Aus der schweizerischen Patentschrift 588 122 ist ein Verfahren zum dezentralen Erfassen kleiner Sätze digitaler Betriebsdaten mittels betriebsinterner Telefonapparate bekannt. Dabei werden bei etablierter Verbindung zwischen dem Teilnehmerendgerät und einem an das Kommunikationssystem angeschlossenen Registriergerät (Host-Rechner) Daten durch Betätigen der Wähleinrichtung des Teilnehmerendgerätes übertragen. Das Verfahren wird insbesondere zum Erfassen der Präsenzzeiten des Personals genutzt, kann aber auch für weitere Anwendungsfälle modifiziert werden.

Aus der deutschen Offenlegungsschrift DE-A-27 58 722 ist ein Verfahren offenbart, mittels dem nach Maßgabe der Eingabe von Daten Änderungen des Inhalts von Datenspeichern bewirkt werden. Dies erfolgt in Abhängigkeit von Berechtigungen der anrufenden und angerufenen Anschlußstelle und der Wahl von Informationen durch die anrufende Sprechstelle sowie von der Zustimmung einer anrufenden Anschlußstelle. Wie allerdings Datendienstanwendungen unterschiedlichen Gegebenheiten anzupassen sind, ohne jeweils diesen Gegebenheiten durch neue Codierungen von Software Rechnung tragen zu müssen, wird hier nicht angesprochen.

Aus der Druckschrift "Proceedings, International Switching Symposium, 15.-20. März 1987, Band 4,Seiten 964-968, Phoenix, USA, K. Sato et al. "Hierachical Network Data Management Architecture Applied to the Public Telephone Network"," wird das Erstellen von Leitungsmerkmalen (Services) in einem globalen Netz angesprochen. Allerdings müssen hierzu auch Compilerprogramme verwendet werden, was in der Praxis einen erhöhten Aufwand bedeutet.

Problematisch daran ist allerdings, daß für jeden Anwendungsfall geeignete Steuerprozeduren im Hostrechner erstellt werden müssen. So unerscheiden sich z. B. die Steuerprozeduren für die Gleitzeiterfassung grundlegend von denen für Bestellvorgänge. Weiterhin besteht oft der Wunsch, die Daten speziell für individuelle Anwendungsfälle aufzubereiten. Solchen Kundenwünschen muß durch eine entsprechende Codierung der Steuerprozeduren entsprochen werden.

Der Erfindung liegt die Aufgabe zugrunde, den unterschiedlichen Gegebenheiten der Datendienstanwendung ohne jeweils neue systemkonforme Codierungen Rechnung zu tragen. Dies wird ausgehend von dem in Oberbegriff des Anspruchs 1 definierten Verfahren durch die kennzeichnenden Merkmale des Anspruchs 1 erreicht.

Wesentlich für die Erfindung ist ein übergeordnetes Bausatzprogramm, das Checkroutinen, Tabellen mit unterschiedlichen Tonfrequenzen/ Ausgabetexten, eine zentrale Datenbank sowie eine Tabelle mit den jeweiligen, bereits codierten Programmschritten enthält. Dabei wird dem Umstand Rechnung getragen, daß in verschiedenen Anwendungsfällen - wie z. B. Bestellvorgang Gleitzeiterfassung, etc. - die Checkroutinen ähnliche Schnittstellen aufweisen. Solche Checkroutinen können derart festgelegt werden, daß sie für alle Anwendungsfälle verwendet werden können. Weiterhin ist im Bausatzprogramm eine Tabelle implementiert, in der eine Reihe von Tätigkeiten bereits vorcodiert sind. Somit kann der Anwender die einzelnen Schritte menüartig zu einem individuellen Programm zusammenstellen. Darin werden die vom Fernsprech-Endgerät ausgehenden Sonderdaten verarbeitet und in einer Datenbank abgelegt. Diese enthält eine externe Softwareschnittstelle. Somit können die in der Datenbank abgelegten Daten jederzeit von weiteren externen Programmen wie beispielsweise 'MULTIPLAN' oder 'dBASE' geladen, und zu statistischen Zwecken weiterverarbeitet werden.

Die Erfindung wird im folgenden anhand eines in zwei Figuren dargestellten Ausführungsbeispiels erläutert.

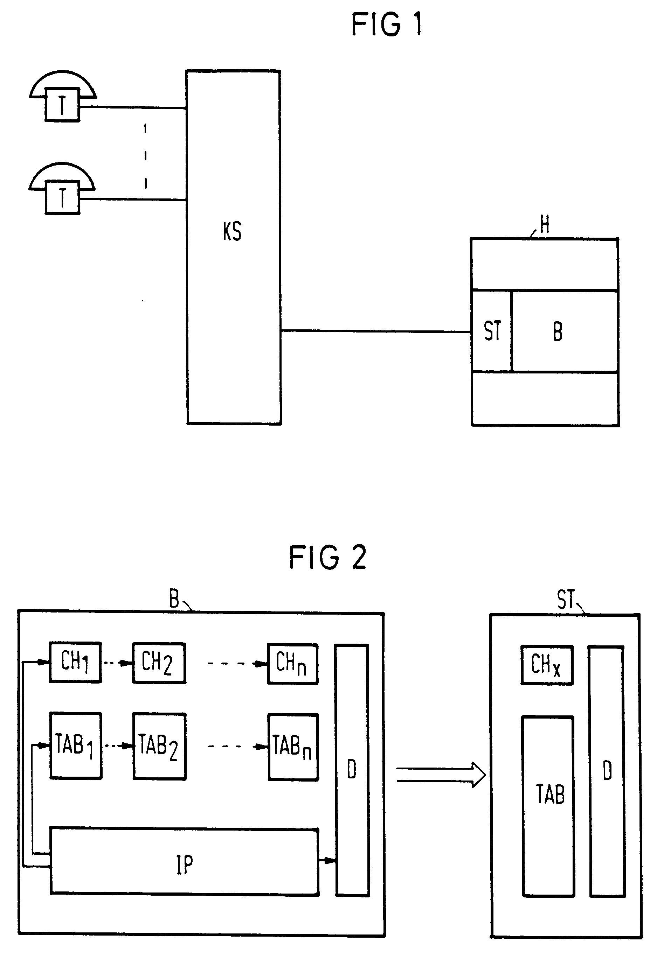

FIG 1 zeigt ein Kommunikationssystem KS, an das über Teilnehmeranschlußleitungen die Endgeräte T angeschaltet sind. Im einfachsten Fall handelt es sich dabei um Telefonapparate mit einer Wähleinrichtung. Weiterhin ist ein Hostrechner H über eine Verbindungsleitung mit dem Kommunikationssystem KS verbunden. Der Hostrechner H dient üblicherweise der Unterstützung des Kommunikationssystems KS; es werden Zustandsdaten über das Kommunikationssystem KS sowie die Endteilnehmer T abgelegt bzw. Gebührendaten erfaßt. Im Hostrechner H erstellt ein Bausatzprogramm B unter Eingabe verschiedener Parameter aufgabenindviduell Steuerprozeduren ST.

Wie in FIG 2 schematisch angedeutet, enthält das Bausatzprogramm B enthält eine Datenbank D, bereits vorcodierte Checkprozeduren CH1, CH2...CHn (n > 2) sowie die Tabellen TAB1, TAB2...TABₘ(m > 2). In der Tabelle TAB1 sind die verschiedenen Tonfrequenzen, die später in der Steuerprozedur ST als Quittungstöne ausgegeben werden, enthalten. Die Tabelle TAB2 beinhaltet verschiedene Ausgabetexte. Diese werden zusammen mit den Tonfrequenzen später als Quittungen zum Endteilnehmer zurückgegeben. Dieser erkennt anhand der Tonfrequenz sowie dem Quittungstext, ob die von ihm gewünschte Datenübermittlung korrekt erfolgt ist, und welche weiteren Schritte - durch eine entsprechende Eingabe vom Endgerät aus - durchzuführen sind. Weiterhin sind in der Tabelle TAB3 eine Vielzahl möglicher Programmschritte vorcodiert enthalten.

Die Steuerprozedur ST wird erstellt, indem im Bausatzprogramm B festgelegt wird, welche Tätigkeiten der Reihe nach ausgeführt werden sollen sowie welche Töne/Ausgabetexte der Endteilnehmer nach Übertragen der Daten zum Hostrechner H erhalten soll. Die einzelnen Schritte werden dabei menueartig durch eine zu diesem Zweck residente Implementierungsprozedur IP zusammengestellt. Weiterhin wird die Datenbank D in die zu erstellende Steuerprozedur ST mitintegriert. Als Endergebnis entsteht tabellarisch die Steuerprozedur ST:
Hauptbestandteil der Steuerprozedur ST ist die aus den Tabellen TAB₁...TABₘ des Bausatzprogrammes B entstandene Tabelle TAB. Hier sind die Programmschritte der Steuerprozedur ST aufgabenindividuell festgelegt. Die Tabelle TAB übernimmt die Daten von der Checkprozedur CHx, (CHx CH₁...CHₙ und speichert sie in der Datenbank D ab. Über eine Softwareschnittstelle können Progamme wie 'MULTIPLAN' oder 'dBASE' auf jene Daten zur weiteren statistischen Verarbeitung zugreifen.

## Patentansprüche

1. Verfahren zur Implementierung von Programmen in einem mit einem Kommunikationssystem (KS) verbundenen Hostrechner (H), auf dem der Durchführung von Teilnehmerdatendienstapplikationen (TDD) dienende, auf dem Hostrechner (H) mittels dessen System/Support Software applikationsindividuell erstellte Steuerprozeduren (ST) ablaufen, die von Endgeräten (T) des Kommunikationssystems (KS) ausgehende Daten verarbeiten,
**dadurch gekennzeichnet,**
daß ein übergeordnetes Bausatzprogramm (B) mit Checkprozeduren (CH₁...CHₙ) zur Überprüfung der Syntax der vom Endgerät (T) ausgehenden Daten eine erste Tabelle (TAB1) mit unterschiedlichen Tonfrequenzen, eine zweite Tabelle (TAB2) mit unterschiedlichen Ausgabetexten, eine dritte Tabelle (TAB3), in der eine Vielfalt möglicher Programmschritte vorcodiert enthalten ist, sowie eine Datenbank (D) zum Abspeichern von Daten vorgesehen ist und daß das Bausatzprogramm (B) eine Implementierungsprozedur (IP) startet, die die applikationsindividuelle Steuerprozedur (ST) derart erstellt, daß sie
- wenigstens eine in der ersten Tabelle (TAB1) enthaltene Tonfrequenz,
- wenigstens einen in der zweiten Tabelle (TAB2) enthaltenen Ausgabetext,
- die in der dritten Tabelle (TAB3) enthaltenen, vorcodierten Programmschritte, und
- wenigstens eine Checkprozedur (CH₁...CHₙ), sowie
- die Datenbank (D) tabellarisch zusammenfügt.

2. Verfahren nach Anspruch 1
**dadurch gekennzeichnet,**
daß die Datenbank (D) eine externe Softwareschnittstelle zur weiteren Aufbereitung der Daten enthält.

## Claims

1. Method for implementing programs in a host computer (H) which is connected to a communications system (KS) and on which run control procedures (ST) which are used to execute subscriber-data service applications (TDD) and are generated on an application-specific basis on the host computer (H) by means of its system software/support software and which process data originating from terminals (T) of the communications system (KS), characterized in that a superordinate kit program (B) with check procedures (CH₁...CHₙ) for checking the syntax of the data originating from the terminal (T), a first table (TAB1) with different sound frequencies, a second table (TAB2) with different output texts, a third table (TAB3) in which a variety of possible program steps are contained in precoded form and a database (D) for storing data being provided, and in that the kit program (B) starts an implementation procedure (IP) which generates the application-specific control procedure (ST) in such a way that it combines in table form
- at least one sound frequency contained in the first table (TAB1),
- at least one output text contained in the second table (TAB2),
- the precoded program steps contained in the third table (TAB3), and
- at least one check procedure (CH₁...CHₙ), and
- the database (D).

2. Method according to Claim 1, characterized in that the database (D) contains an external software interface for the further conditioning of the data.

## Revendications

1. Procédé pour l'exécution de programmes dans un ordinateur central (ou host) (H), relié à un système de communication (KS), sur lequel se déroulent des procédures de commande (ST), qui sont établies spécifiquement pour les applications sur l'ordinateur central (ou host) (H) à l'aide de son logiciel système / support et qui servent à l'exécution d'applications (TDD) du service des données d'usagers, ces procédures de commande (ST) traitant des données provenant des terminaux (T) du système de communication (KS),
**caractérisé par le fait**
qu'il est prévu un jeu de modules (B) de rang supérieur, avec des procédures de contrôle (CH₁, ..., CHₙ) pour la vérification de la syntaxe des données provenant du terminal (T), ce jeu de modules (B) contenant un premier tableau (TAB1) avec diverses fréquences sonores, un deuxième tableau (TAB2) avec divers textes de sortie, un troisième tableau (TAB3), qui renferme, sous forme précodée, une pluralité d'étapes possibles de programme, ainsi qu'une banque de données (D) pour la mémorisation de données, et par le fait que le jeu de modules (B) initie une procédure d'exécution (IP), qui établit la procédure de commande (ST) spécifique à l'application de telle sorte qu'elle assemble sous forme de tableau
- au moins une fréquence sonore contenue dans le premier tableau (TAB1),
- au moins un texte de sortie contenu dans le deuxième tableau (TAB2),
- les étapes de programme précodées contenues dans le troisième tableau (TAB3) et
- au moins une procédure de contrôle (CH₁, ..., CHₙ), ainsi que
- la banque de données (D).

2. Procédé selon la revendication 1
**caractérisé par le fait**
que la banque de données (D) comporte une interface externe en logiciel pour l'édition ultérieure des données.
